# EUROPÄISCHE PATENTSCHRIFT

(11) **EP 3 353 516 B1**
(45) Veröffentlichungstag und Bekanntmachung des Hinweises auf die Patenterteilung: **25.05.2022**
(21) Anmeldenummer: 16770913.8
(22) Anmeldetag: 20.09.2016
(51) Int. Cl.: G01L 9/00, G01L 19/00

(54) **FASEROPTISCHER DRUCKSENSOR UND VERFAHREN**
FIBRE-OPTIC PRESSURE SENSOR AND METHOD
CAPTEUR DE PRESSION À FIBRE OPTIQUE ET PROCÉDÉ

(30) Priorität: 21.09.2015 DE 102015115926
(43) Veröffentlichungstag der Anmeldung: 01.08.2018
(73) Patentinhaber: FOS4X GmbH, 81371 München (DE)
(72) Erfinder: MÜLLER, Mathias, 81541 München (DE)
(74) Vertreter: Kilchert, Jochen
(86) Internationale Anmeldenummer: PCT/EP2016/072307
(87) Internationale Veröffentlichungsnummer: WO 2017/050765

(56) Entgegenhaltungen:
- WO-A1-2014/142958
- CN-A- 104 739 377
- US-A1- 2011 023 617
- US-A1- 2012 210 797
- CHAN M A ET AL: "A micromachined pressure sensor with fiber-optic interferometric readout", SENSORS AND ACTUATORS A: PHYSICAL, ELSEVIER BV, NL, vol. 43, no. 1-3, 1 May 1994 (1994-05-01), pages 196-201, XP026615733, ISSN: 0924-4247, DOI: 10.1016/0924-4247(93)00694-Y [retrieved on 1994-05-01]

## Beschreibung

### TECHNISCHES GEBIET

Ausführungsformen der vorliegenden Erfindung betreffen im Allgemeinen einen Drucksensor, insbesondere einen faseroptischen Drucksensor, welcher beispielsweise geeignet ist zur Erfassung von Druck, Druckvariationen, von akustischen und statischen Signalen, zur Messung in Fluiden und/oder zur Steuerung und Regelung von Windkraftanlagen.

### STAND DER TECHNIK

Drucksensoren sind im Allgemeinen als Messeinrichtungen ausgelegt, welche einen Druck als Kraft pro Flächeneinheit in eine elektrische Ausgangsgröße umformen. Derartige Drucksensoren werden für vielfältige Steuerungs- und Regelungszwecke eingesetzt, beispielsweise zur Messung von Luftschall, Körperschall, statischem Druck, etc. in unterschiedlichen Medien. In vielen Fällen beruht die Druckmessung auf einer messbaren Auslenkung einer Druckmembran. Neben einer elektrischen Erfassung einer derartigen Auslenkung, zum Beispiel mittels Dehnungsmessstreifen, steht eine optische Membranerfassung zur Verfügung.

WO 2014/142958 A1 zeigt eine optische Drucksensoranordnung für medizinische Anwendungen, insbesondere zur Verwendung mit Kathetern oder einem Bildgebungssystem, die ein längliches, hohles Gehäuse aufweist, in dem sich eine optische Faser erstreckt, deren Ende auf eine elastische Membran ausgerichtet ist. Von dem Ende der optischen Faser emittiertes Licht wird an der Membran teilweise reflektiert und zurück in die optische Faser gekoppelt. US 2012/210797 A1 beschreibt einen ultra-miniaturisierten, faseroptischen Drucksensor, der insbesondere für biomedizinische Anwendungen mit limitiertem Raum ausgelegt ist. Der Drucksensor weist eine optische Kavität auf, die unmittelbar an einem Ende einer optischen Faser an deren Seitenwand ausgebildet. Das Ende der optischen Faser ist derart geschnitten, dass Licht an der Endoberfläche der optischen Faser in die optische Kavität geleitet wird. Die optische Kavität ist durch eine mit einem Polymer befüllte Kavität gebildet, deren Grenzfläche aufgrund einer hohen Brechungsindexdifferenz zwischen dem Polymer und der Umgebungsluft stark reflektiert, oder die optische Kavität weist eine reflektierende Membran auf, die sich parallel zur Seitenwand der optischen Faser erstreckt. CN 104739377 befasst sich mit einer Vorrichtung zum gleichzeitigen Durchführen einer OCT Bildgebung und einer Druckmessung in einem Blutgefäß. Die Vorrichtung weist eine zylindrische Hülle auf, in der ein Ende einer optischen Faser geführt ist. Licht, das aus dem Ende der optischen Faser austritt, wird an einer Membran reflektiert, die an der Deckfläche der zylindrischen Hülle ausgebildet ist.

Eine optisch basierte Erfassung einer Membranauslenkung zur Bestimmung eines an der Membran anliegenden Drucks weist u.a. die Eigenschaft auf, dass elektrische Störungen eliminiert oder zumindest reduziert werden und dass eine elektromagnetische Verträglichkeit sichergestellt wird. Es ist daher erstrebenswert, faseroptischen Sensoren zur Druckerfassung weiter zu verbessern.

### ZUSAMMENFASSUNG DER ERFINDUNG

Zur Lösung der vorstehenden Aufgabe wird ein faseroptischer Drucksensor mit den Merkmalen von Anspruch 1 vorgeschlagen.

Vorteilhafte Ausgestaltungen ergeben sich aus den Unteransprüchen.

Der Fachmann wird feststellen, dass einige Elemente der folgenden Beschreibung nicht in den Schutzbereich der Ansprüche fallen. Soweit eine solche Diskrepanz besteht, ist diese Offenbarung als bloße unterstützende Information zu verstehen, die nicht Teil der Erfindung ist. Die Erfindung wird allein durch die Ansprüche definiert.

### KURZE BESCHREIBUNG DER ZEICHNUNGEN

Ausführungsbeispiele sind in den Zeichnungen dargestellt und in der nachfolgenden Beschreibung näher erläutert. In den Zeichnungen zeigen:
Figur 1A zeigt schematisch einen faseroptischen Drucksensor mit einer Kavität in einem Längsschnitt entlang einer Lichtleiterachse, gemäß einer Ausführungsform;
Figur 1B zeigt die Positionierung einer optischen Umlenkeinheit in Bezug auf die Kavität detaillierter, gemäß einer Ausführungsform;
Figur 2A zeigt schematisch den in den Figuren 1A, 1B dargestellten faseroptischen Drucksensor in einer perspektivischen Ansicht von der Seite einer Lichtleiter-Einkopplung;
Figur 2B zeigt schematisch den in den Figuren 1A, 1B dargestellten faseroptischen Drucksensor in einer perspektivischen Ansicht von der Seite einer Druckmembran;
Figur 3A zeigt schematisch einen faseroptischen Beschleunigungssensor mit einem optische Resonator;
Figur 3B zeigt den in Figur 3A dargestellten faseroptischen Beschleunigungssensor in einer perspektivischen Ansicht;
Figur 4 zeigt schematisch einen Teil einer Windkraftanlage mit Rotorblättern und daran angebrachten Drucksensoren;
Figur 5 zeigt schematisch einen Messaufbau für einen faseroptischen Drucksensor gemäß hier beschriebenen Ausführungsformen;
Figur 6 zeigt schematisch einen Messaufbau für einen faseroptischen Drucksensor gemäß hier beschriebenen;
Figur 7 zeigt ein Ablaufdiagramm zur Veranschaulichung eines Verfahrens zur Druckmessung mittels eines faseroptischen Drucksensors ; und
Figur 8 zeigt ein Ablaufdiagramm zur Veranschaulichung eines Verfahrens zum Herstellen eines faseroptischen Drucksensors .

In den Zeichnungen bezeichnen gleiche Bezugszeichen gleiche oder funktionsgleiche Komponenten oder Schritte.

### WEGE ZUR AUSFÜHRUNG DER ERFINDUNG

Im Folgenden wird detaillierter Bezug genommen auf verschiedene Ausführungsformen der Erfindung, wobei ein oder mehrere Beispiele in den Zeichnungen veranschaulicht sind.

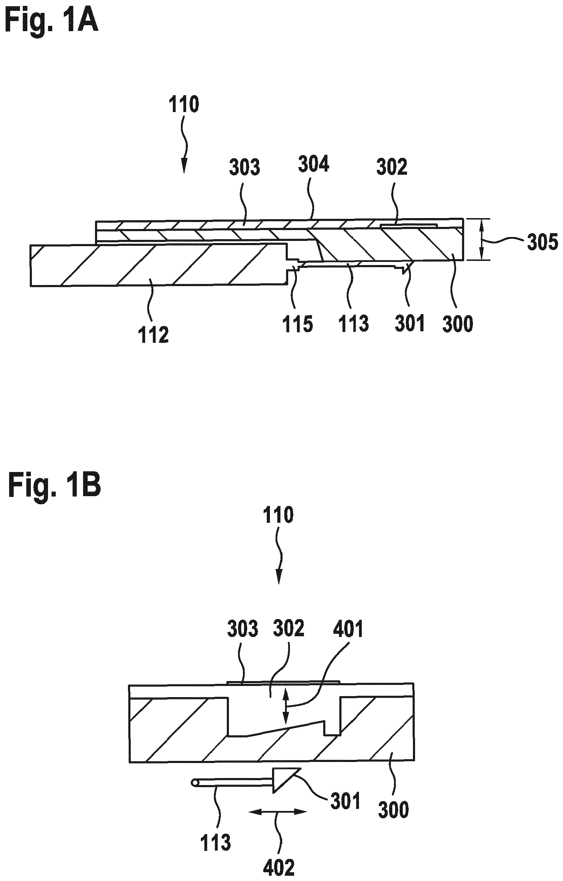

Figur 1A zeigt schematisch einen faseroptischen Drucksensor 110 in einem Längsschnitt entlang einer Lichtleiterachse eines Lichtleiters 112, gemäß einer Ausführungsform. Wie in Figur 1A gezeigt, erstreckt sich der Lichtleiter 112 unterhalb eines Sensorkörpers 300. In dem Sensorkörper 300 ist eine Kavität 302 ausgebildet, welche mit einer Sensormembran 303 abgedeckt ist. Der Sensorkörper 300 ist in seiner Gesamtheit mit einer Abdeckung 304 versehen, derart, dass eine einstellbare Gesamt-Sensordicke 305 erreicht wird.

An einer longitudinalen Position unterhalb der Kavität 302 ist der äußere Schutzmantel des Lichtleiters 112 entfernt, so dass ein Lichtleitermantel 115 und/oder ein Lichtleiterkern 113 entlang der unteren Seite des Sensorkörpers 300 verlaufen.

An einem Ende oder in der Nähe des Endes des Lichtleiters 112 ist eine optische Umlenkeinheit 301 angebracht, welche dazu dient, aus dem Lichtleiter austretendes Licht um ungefähr 90° in Richtung auf den Sensorkörper 300, zum Beispiel um 60° bis 120°, und damit auf die Kavität 302 umzulenken. Das Ende des Lichtleiters 112 dient hierbei sowohl als Lichtaustrittsfläche zum Emittieren von Licht in Richtung zur optischen Umlenkeinheit 301 als auch als Lichteintrittsfläche zum Aufnehmen von Licht, welches aus der Kavität 302 zurück reflektiert wird.

Der beispielsweise als ein Substrat ausgebildete Sensorkörper 300 wird durchstrahlt, derart, dass Licht in die Kavität 302 eintreten und an der Sensormembran 303 reflektiert werden kann. Die Oberseite und die Unterseite der Kavität bilden somit einen optischen Resonator, wie beispielsweise einen Fabry-Perot-Resonator. Das Spektrum des in die optische Faser zurückgeworfenen Lichts zeigt ein Interferenzspektrum, insbesondere Interferenzmaxima bzw. Interferenzminima, deren Lage von der Größe des optischen Re-sonators abhängt. Durch eine Analyse der Lage der Maxima bzw. Minima im reflektierten Spektrum kann eine Veränderung der Resonator-Größe bzw. eine druckabhängige Aus-lenkung der Sensormembran 303 detektiert werden.

Um einen faseroptischen Drucksensor, wie er zum Beispiel in Figur lA dargestellt ist, besonders einfach an einem Rotorblatt, insbesondere in einem äußeren radialen Bereich, zur Verfügung zu stellen, ist es von Vorteil, wenn der faseroptische Drucksensoren in einem Querschnitt senkrecht zum Lichtleiter 112 in Figur lA eine geringe Abmessung 305 aufweist. Zum Beispiel kann eine maximale Abmessung 305 in einem Querschnitt senkrecht zur Achse des Lichtleiter 112 10 mm oder weniger betragen, und kann insbesondere 5 mm oder weniger betragen. Durch die Ausgestaltung, wie sie in Bezug auf Figur lA dargestellt ist, kann eine solche Dimensionierung einfach realisiert werden.

Zur Durchführung einer Druckmessung wird die Sensormembran 303 dem zu erfassenden Druck ausgesetzt. Abhängig vom anliegenden Druck wölbt sich die Membran, wodurch die Querschnittsabmessungen der Kavität 302 und damit des optischen Re-sonators kleiner werden.

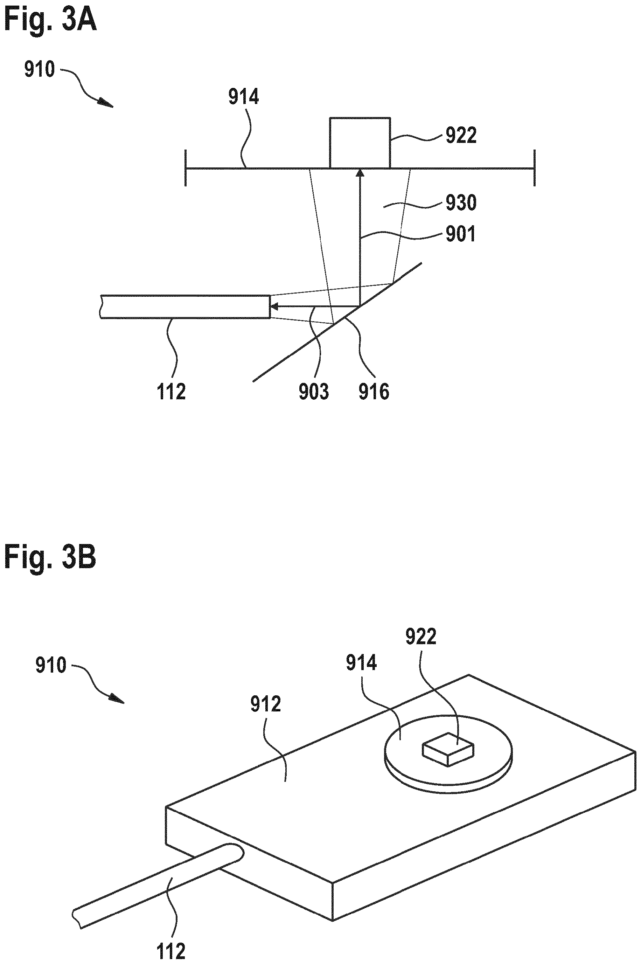

Gemäß einer weiteren Ausführungsform, welche mit ihren beschriebenen Ausführungsformen kombinierbar ist, kann die Sensoreinheit 110 ferner zur Messung einer Beschleunigung ungefähr senkrecht zur Oberfläche der Sensormembran 303 verwendet werden. Hierfür ist es vorteilhaft, wenn eine mit der Sensormembran-Oberseite verbundene Masse bereitgestellt wird, wie untenstehend unter Bezugnahme auf die Figuren 3A und 3B beschrieben wird.

Figur 1B zeigt ein Verfahren zur Positionierung der optischen Umlenkeinheit 301 in Bezug auf die Kavität 302 detaillierter. Wie in Figur 1B gezeigt, weist die Kavität 302 entlang der Längserstreckung des Lichtleiters 112 eine unterschiedliche Länge 401 auf. Die Länge 401 der Kavität 302 bestimmt das Reflexionsspektrum des optischen Re-sonators 302. Auf diese Weise wird die Lage der Interferenzmaxima bzw. -minima des aus dem Resonator ausgegebenen Lichts festgelegt. Gemäß einer weiteren beschriebenen Ausführungsform, die mit anderen hierin beschriebenen Ausführungsformen kombinierbar ist, wird ein Interferenzspektrum erfasst.

Im Einzelnen beinhaltet das Verfahren zum Herstellen eines faseroptischen Drucksensors die Schritte: Bereitstellen eines Sensorkörpers 300, Bilden eines optischen Resonators 302 in dem Sensorkörper 300, wobei der Sensorkörper 300 mindestens eine Sensormembran 303 aufweist, Positionieren eines Lichtleiters 112 an dem Sensorkörper an einer Messposition 402 derart, dass eine durch den Lichtleiter 112 transmittierte optische Strahlung den optischen Resonator 302 an einer räumlichen Position durchquert, die einer vorgegebenen Transmissionswellenlänge entspricht. Schließlich erfolgt ein Befestigen des Lichtleiters 112 und/oder der Umlenkeinheit 301 an den Sensorkörper 300 in der Messposition 402.

Gemäß einer Ausführungsform, welche mit anderen hierin beschriebenen Ausführungsformen kombiniert werden kann, wird das Ende des Lichtleiters 112 bzw. die Umlenkeinheit 301 derart positioniert, dass eine durch den Lichtleiter 112 transmittierte optische Strahlung den optischen Resonator 302 an einer räumlichen Position durchquert, welche einer vorgegebenen Transmissionswellenlänge entspricht. Hierbei beinhaltet das Bilden des optischen Resonators 302 ein Bilden eines Resonators, welcher parallel zu der Sensormembran 303 eine variierende Länge 401 aufweist. Ist die gewünschte Transmissionswellenlänge eingestellt, wird der Lichtleiter 112 und/oder die Umlenkeinheit 301 an den Sensorkörper 300 in der Messposition 402 (in Figur 1B gezeigt) befestigt. Insbesondere kann das Positionieren des Lichtleiters 112 ein Positionieren einer mit einem Ende
des Lichtleiters 112 verbundenen optischen Umlenkeinheit 301 an dem Sensorkörper 300 an einer Messposition 402 einschließen, derart, dass eine durch den Lichtleiter 112 transmittierte und mittels der Umlenkeinheit 301 umgelenkte optische Strahlung den optischen Resonator 302 an einer räumlichen Position durchquert, die der vorgegebenen Transmissionswellenlänge entspricht. Gemäß einer weiteren Ausführungsform, welche mit anderen hierin beschriebenen Ausführungsformen kombiniert werden kann, kann das Positionieren ein Verschieben der Umlenkeinheit 301 zusammen mit dem Lichtleiter 112 in einer Richtung 112 im wesentlichen parallel zu der Sensormembran 303 beinhalten.

Gemäß einer Ausführungsform, welche mit anderen hierin beschriebenen Ausführungsformen kombiniert werden kann, wird das Befestigen des Lichtleiters 112, 115, 113 und/oder der Umlenkeinheit 301 an dem Sensorkörper 300 in der Messposition 402 mittels Kleben oder Löten durchgeführt.

Gemäß einer weiteren Ausführungsform weisen der faseroptische Drucksensor 110 und/oder das Ende des Lichtleiters 112 mindestens eine optische Strahlformungskomponente auf, beispielsweise am Ende des Lichtleiterkerns 113, um den aus dem Lichtleiterkern 113 austretenden Lichtstrahl zu formen, beispielsweise um denselben aufzuweiten. Die optische Strahlformungskomponente weist mindestens eines der folgenden auf: eine Gradientenindex-Linse (GRIN-Linse), einen Mikrospiegel, ein Prisma, eine Kugellinse, und jedwede Kombination davon.

Gemäß einer weiteren Ausführungsform, welche mit anderen hierin beschriebenen Ausführungsformen kombiniert werden kann, kann die Umlenkeinheit 301 mit einem der folgenden integral ausgebildet sein: einer Gradientenindex-Linse (GRIN-Linse), einem Mikrospiegel, einem Prisma, einer Kugellinse, und jedweder Kombination davon.

Auf diese Weise wird ein faseroptischer Drucksensor 110 erhalten, welcher aufweist: einen Lichtleiter 112 mit einem Ende, eine mit dem Ende des Lichtleiters 112 verbundene optische Umlenkeinheit 301 und den Sensorkörper 300, an welchem mittels der Sensormembran 303 ein optischer Resonator 302 ausgebildet ist, wobei der Lichtleiter 112 und/oder die Umlenkeinheit 301 an dem Sensorkörper 300 mittels eines aushärtbaren Klebers oder einer Lötverbindung angebracht sind. Gemäß einer Ausführungsform kann der aushärtbare Kleber als ein mittels UV-Licht aushärtbarer Kleber bereitgestellt sein.

Gemäß einer weiteren Ausführungsform, welche mit anderen hierin beschriebenen Ausführungsformen kombiniert werden kann, können der Sensorkörper 300 und/oder die Kavität 302 und/oder die Sensormembran 303 und/oder die Abdeckung 304 monolithisch ausgebildet sein, insbesondere als ein monolithischer Glaskörper. Gemäß Ausführungsformen, welche mit anderen hierin beschriebenen Ausführungsformen kombinierbar sind, kann die Abdeckung 304 beispielsweise auf den Sensorkörper 300 aufgeschmolzen sein.

Gemäß Ausführungsformen, welche mit anderen hierin beschriebenen Ausführungsformen kombinierbar sind, kann der optische Resonator 302 als ein Fabry-Perot-Interferometer ausgebildet sein, das eine Kavität mit der mindestens einen Sensormemb-ran 303 bildet. Auf diese Weise kann eine hohe Auflösung bei der Erfassung einer druckabhängigen Auslenkung der Sensormembran 303 erreicht werden.

Gemäß Ausführungsformen, welche mit anderen hierin beschriebenen Ausführungsformen kombinierbar sind, kann der optische Resonator 302 eine Kavität bilden, welche luftdicht zur Umgebung abgeschlossen ist und einen vorbestimmten Innendruck aufweist. Auf diese Weise wird die Möglichkeit bereitgestellt, eine auf den Innendruck bezogene Referenzmessung auszuführen. Für eine Messung eines statischen Drucks kann der Bereich des optischen Resonators 302 vom Umgebungsdruck getrennt sein, so dass bei einer Änderung des Umgebungsdrucks, eine Bewegung der Membran stattfindet. Für die Messung eines Schalldruckpegel, ist die Membran ausgestaltet um bei einem entsprechenden Schalldruck eine Bewegung, insbesondere eine oszillierende Bewegung auszuführen, die über den optischen Resonator in ein optisches Signal übertragen wird.

Gemäß weiteren Ausführungsformen, welche mit hierin beschriebenen Ausführungsformen kombinierbar sind, kann der optische Resonator 302 eine Kavität bilden, welche luftdicht zur Umgebung abgeschlossen ist und evakuiert ist.

Mit einem derartigen faseroptischen Drucksensor 110 ist es möglich, eine optische Druckmessung mittels der folgenden Schritte durchzuführen: Bereitstellen des Sensorkörpers 300 mit mindestens einer druckempfindlichen Sensormembran 303, Bilden des optischen Resonators 302 mit der Membran 303, Einstrahlen von aus einem Ende des Lichtleiters 112 ausgekoppeltem Licht in den optischen Resonator 302, Beaufschlagen der Membran 303 mit einem zu messenden Druck, Erfassen eines aus dem optischen Re-sonators ausgegebenen optischen Interferenzspektrums, und Auswerten des Interferenzspektrums zur Bestimmung des zu messenden Drucks. Bei einem Auswerten kann die Phasenlage des Interferenzspektrums ausgewertet werden. Zu diesem Zweck wird beispielsweise ein sinusförmiges Interferenzspektrum über ein Kantenfilter zur Auswertung herangezogen. Gemäß einem Ausführungsbeispiel, welches mit anderen hierin beschriebenen Ausführungsbeispielen kombiniert werden kann, kann das Spektrum derart gewählt werden, dass einige Perioden des Interferenzspektrums von der Lichtquelle abgedeckt werden. Mit anderen Worten ist es in typischer Weise möglich, eine Interferenzperiode von 20 nm bereitzustellen, während die Lichtquellenbreite 50 nm beträgt. Aufgrund der spektralen Auswertung kann die Kohärenzlänge der einfallenden Strahlung hier gegebenfalls nicht berücksichtigt werden.

Gemäß Ausführungsformen, welche mit anderen hierin beschriebenen Ausführungsformen kombinierbar sind, kann der faseroptische Drucksensor 110 ferner zum Messen einer Beschleunigung in einer Richtung ungefähr senkrecht zur Oberfläche des optischen Resonators 302 herangezogen werden.

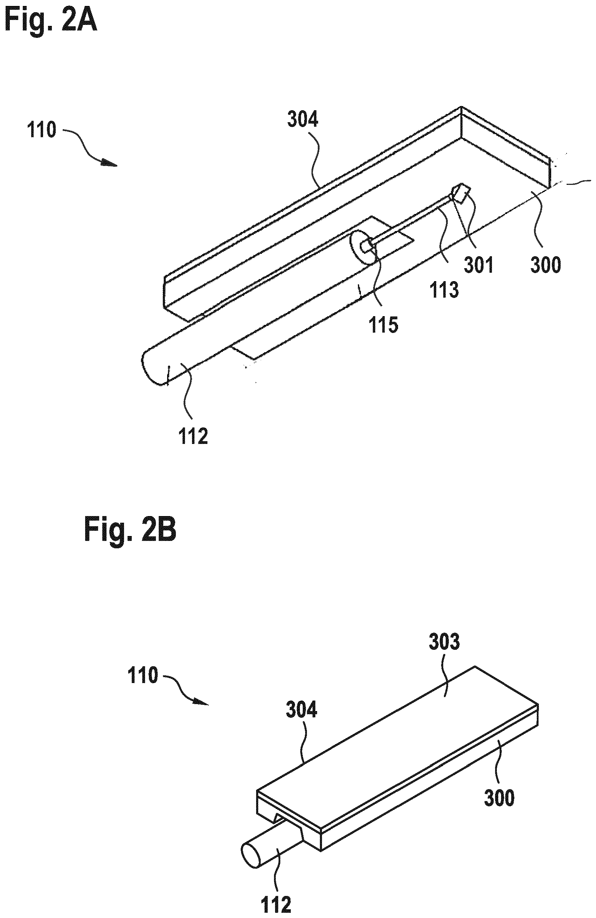

Die Figuren 2A und 2B zeigen weitere Ansichten des faseroptischen Drucksensors 110 aus unterschiedlichen Blickwinkeln, zur Verdeutlichung einer typischen Ausführungsform.

Figur 2A zeigt schematisch den in Figur 1A dargestellten faseroptischen Drucksensor in einer perspektivischen Ansicht von der Seite einer Lichtleiter-Einkopplung. Wie in Figur 2A gezeigt, ist der Lichtleiter 112 in den Sensorkörper 300 an dessen Unterseite eingebettet, wobei sich der Lichtleiter 112 in einer Richtung ungefähr parallel zur Oberfläche des optischen Resonators 302 erstrecken kann. Der Sensorkörper hat zum Beispiel an der der Membran abgewandten Seite eine Aussparung zur Aufnahme des Lichtleiters. Der Lichtleiterkern 113 weist an seinem Ende die Umlenkeinheit 301 auf, welche gemäß einer Ausführungsform in Form eines Umlenkprismas ausgebildet ist. Um das Positionieren des Lichtleiters 112 in der Messposition 402 (siehe Figur 1B) zu erleichtern, kann der Sensorkörper 300 gemäß Ausführungsformen an seiner Unterseite eine Aussparung, zum Beispiel eine V-förmige Nut, zur Aufnahme des Lichtleiters 112 aufweisen, wie in Figuren 1A, 2A und 2B dargestellt.

Gemäß einer weiteren Ausführungsform, welche mit anderen hierin beschriebenen Ausführungsformen kombiniert werden kann, kann das Befestigen des Lichtleiters 112 und/oder der Umlenkeinheit 301 an dem Sensorkörper 300 mittels eines aushärtbaren Klebers oder mittels einer Lötverbindung bereitgestellt werden.

Gemäß einer weiteren Ausführungsform, welche mit anderen hierin beschriebenen Ausführungsformen kombiniert werden kann, kann die Umlenkeinheit 301 zusammen mit dem Ende des Lichtleiters 112 monolithisch ausgebildet sein.

Figur 2B zeigt schematisch den in Figur 1A dargestellten faseroptischen Drucksensor in einer perspektivischen Ansicht von der Seite der Sensormembran 303. Wie in Figur 2B gezeigt, ist der faseroptische Drucksensor 110 mittels der Abdeckung 304 abgedeckt, wobei der Sensorkörper 300 zusammen mit der Abdeckung 304 eine integrale Einheit ausbilden kann. Zum Beispiel kann die Abdeckung auf den Sensorkörper aufgebracht sein und im Anschluss durch Erwärmen mit diesem verbunden oder verschmolzen werden, insbesondere ist eine Klebeverbindung zweckmäßig.

Figur 3A zeigt schematisch einen faseroptischen Drucksensor oder Beschleunigungssensor 910 mit einem optischen Resonator 930. Das Prinzip eines faseroptischen Beschleunigungssensors 910 beruht auf einer ähnlichen Wirkung wie jener des faseroptischen Drucksensors, d.h. eine Auslenkung einer Membran ändert die Länge eines Re-sonators. Gemäß einigen Ausführungsformen von Druck- und/oder Beschleunigungssensoren, wie in FIG. 3A exemplarisch anhand eines Beschleunigungssensors mit einer Masse 922 dargestellt, kann der optische Resonator 930 auch in einem Bereich zwischen der Austrittsfläche des Lichtleiters 112 und einer Reflexionsfläche einer Membran 914 gebildet werden. Um die Auslenkung der Membran 914 bei einer vorgegebenen Beschleunigung zu verstärken, kann gemäß manchen Ausführungsformen, welche mit hierin beschriebenen Ausführungsformen kombinierbar sind, auf der Membran eine Zusatzmasse 922 angebracht sein.

Gemäß Ausführungsformen, welche mit anderen hierin beschriebenen Ausführungsformen kombinierbar sind, kann der faseroptische Sensor 910 zum Messen einer Beschleunigung in einer Richtung ungefähr senkrecht zur Oberfläche des optischen Re-sonators herangezogen werden. Hierbei kann der faseroptische Sensor 910 als ein Beschleunigungssensor wie folgt zur Verfügung gestellt werden. Der faseroptische Sensor 910 beinhaltet einen Lichtleiter 112 bzw. eine optische Faser mit einer Lichtaustrittsflä-che. Ferner beinhaltet der faseroptische Sensor 910 eine Membran 914 und eine mit der Membran 303 in Verbindung stehende Masse 922. Hierbei kann die Masse 922 entweder zusätzlich zur Masse der Membran zur Verfügung gestellt werden oder die Membran kann mit einer geeigneten ausreichend großen Masse ausgestaltet sein. Der so bereitgestellte faseroptische Beschleunigungssensor 910 beinhaltet einen optischen Resonator 930, der zwischen der Lichtaustrittsfläche des Lichtleiters 112 und der Membran 914 entlang einer Erstreckung 901, 903 ausgebildet ist. Zum Beispiel kann der Resonator ein Fabry-Perot-Resonator sein. Ferner beinhaltet der faseroptische Beschleunigungssensor 910 eine optische Umlenkeinheit 916, die im Strahlengang zwischen der Lichtaustrittsfläche und der Membran 914 zur Verfügung gestellt ist, wobei die optische Umlenkeinheit 916 als ein Prisma oder ein Spiegel in einem Winkel von 30° bis 60° relativ zu einer optischen Achse des Lichtleiter bzw. der optischen Faser angeordnet sein kann. Zum Beispiel kann der Spiegel in einem Winkel von 45° ausgebildet sein.

Ausführungsformen, wie sie anhand von den FIGS. 3A und 3B erläutert werden, d.h. Ausführungsformen, die einen Resonator zwischen der Lichtaustrittsfläche des Lichtwellenleiters 112 und der Membran zur Verfügung stellen, können auch als Drucksensoren oder Schallpegelsensoren ausgebildet sein, wobei hierbei insbesondere auf eine Masse 922, die auf der Membran angebracht ist, verzichtet werden kann bzw. die Masse der Membran geeignet gewählt werden kann.

Gemäß weiteren Ausführungsformen, die mit anderen Ausführungsformen kombiniert werden können, handelt es sich bei dem Beschleunigungssensor 910 um einen faseroptischen Beschleunigungssensor. Für faseroptische Beschleunigungssensoren wird ein optisches Signal mittels des Lichtleiters 112, zum Beispiel einer optischen Faser, an eine Auswerteeinheit (nicht gezeigt) übertragen. Bei einem faseroptischen Beschleunigungssensor kann das Sensorelement selbst außerhalb einer optischen Faser zur Verfügung gestellt werden. Figur 3B zeigt den in Figur 3A dargestellten faseroptischen Beschleunigungssensor in einer perspektivischen Ansicht.

Wie in den Figuren 3A und 3B dargestellt, wird der faseroptische Beschleunigungssensor 910 derart betrieben, dass ein primäres optisches Signal über einen Lichtleiter 112 dem Beschleunigungssensor 910 zugeführt wird. Zum Beispiel kann der Lichtleiter mit einem Substrat 912 verbunden werden. Das Substrat 912 kann aus einem nichtmetallischen Material bestehen. Auf dem Substrat 912 bzw. an dem Substrat 912 ist die Membran 914 ausgebildet. Das aus dem Lichtleiter 112 austretende primäre optische Signal wird über einen Spiegel 916 in Richtung der Membran 912 gelenkt.

Gemäß typischen Ausführungsformen, die mit anderen Ausführungsformen kombiniert werden können, kann der Spiegel 916 als eine im Substrat 912 ausgeformte Fläche zur Verfügung gestellt werden. Zum Beispiel kann das Substrat 912 aus einem Material bestehen, das in einem vorgegebenen Wellenlängenbereich, typischerweise dem Wellenlängenbereich des primären optischen Signals, reflektiert. Der Spiegel kann relativ zur Achse des Lichtleiters einen Winkel im Bereich von 30° bis 60°, zum Beispiel einen Winkel von 45°, aufweisen.

Das primäre optische Signal wird wie durch den Pfeil 901 angedeutet durch den Spiegel 916 umgelenkt und auf die Membran 914 gerichtet. An der Membran 914 findet eine Reflexion des primären optischen Signals statt. Das reflektierte Licht wird wie durch den Pfeil 903 dargestellt zurück in die optische Faser bzw. den Lichtleiter 112 gekoppelt. Somit wird zwischen der Lichtaustrittsfläche für den Austritt des primären optischen Signals und der Membran 914 der optische Resonator 930 ausgebildet. Hierbei ist zu berücksichtigen, dass im Allgemeinen die Lichtaustrittsfläche des primären optischen Signals gleich der Lichteintrittsfläche für das reflektierte sekundäre Signal ist. Der optische Resonator 930 kann somit als Fabry-Perot-Resonator ausgebildet sein. Für einen faseroptischen Beschleunigungssensor 910 gemäß hier beschriebenen Ausführungsformen kann die Masse 922 an der Membran 914 zur Verfügung gestellt sein. Alternativ kann die Masse der Membran selbst als Masse für die Detektion einer Beschleunigung dienen. Bei einer Beschleunigung wird die Membran 914 durch die Trägheit der Masse 922 ausgelenkt. Dies führt zu einem optisch messbaren Signal in dem optischen Resonator 930.

Gemäß hier beschriebenen Ausführungsformen ist der faseroptische Beschleunigungssensor 910 ausgestaltet, um eine Beschleunigung mit einer Richtungskomponente ungefähr senkrecht zur Achse der Faser bzw. des Lichtleiter 112 zu erfassen. Durch die Richtungskomponente ungefähr senkrecht zur Achse des Lichtleiters 112 kann der faseroptische Beschleunigungssensor 912 beispielsweise für Verfahren zur Überwachung von Rotorblättern eingesetzt werden, bzw. in Rotorblätter von Windkraftanlagen bzw. Windkraftanlagen eingebaut werden, um eine Überwachung zu ermöglichen.

Die in den Figuren 3A und 3B dargestellten Komponenten eines extrinsischen faseroptischen Beschleunigungssensors 910 können gemäß beispielhaften Ausführungsformen aus folgenden Materialien bestehen. Der Lichtleiter 112 kann zum Beispiel eine Glasfaser, eine optische Faser oder ein Lichtwellenleiter sein, wobei Materialien wie optische Polymere, Polymethylmethacrylat, Polycarbonat, Quarzglas, Ethylen-Tetrafluorethylen verwendet werden können, die gegebenenfalls dotiert sind. Das Substrat 912 bzw. der darin ausgestaltete Spiegel 916 kann zum Beispiel aus Silizium bestehen. Die Membran kann aus einem Kunststoff oder einem Halbleiter zur Verfügung gestellt werden, der geeignet ist, als dünne Membran ausgebildet zu werden. Die Masse 922 kann aus jedem nichtmetallischen Material zur Verfügung gestellt werden, wobei insbesondere Materialien mit einer hohen Dichte geeignet sind. Durch eine hohe Dichte kann die Abmessung der Masse 922 reduziert werden.

Bei einer Verringerung bzw. einem Entfallen der Masse 922 kann die Membran 914 sowohl zur Messung eines statischen Drucks verwendet werden als auch zur Messung eines Schalldruckpegels. Für die Messung eines statischen Drucks ist der Bereich des optischen Resonators 930 vom Umgebungsdruck getrennt, so dass bei einer Änderung des Umgebungsdrucks eine Bewegung der Membran stattfindet. Für die Messung eines Schalldruckpegels ist die Membran derart ausgelegt, um bei einem entsprechenden Schalldruck eine Bewegung, insbesondere eine oszillierende Bewegung auszuführen, die über den optischen Resonator 930 in ein optisches Signal übertragen wird.

Um einen faseroptischen Beschleunigungssensor 910 beispielsweise in einer Windkraftanlage einzusetzen, kann der faseroptische Sensor, wie er zum Beispiel in den Figuren 3A und 3B dargestellt ist, an einem Rotorblatt, insbesondere in einem äußeren radialen Bereich, zur Verfügung gestellt werden. Hierbei ist es von Vorteil, wenn der faseroptische Beschleunigungssensor 910 in einem Querschnitt senkrecht zum Lichtleiter 112 in Figur 3A bzw. 3B eine geringe Abmessungen aufweist. Zum Beispiel kann eine maximale Abmessung in einem Querschnitt senkrecht zur Achse des Lichtleiter 112 10 mm oder weniger betragen, und kann insbesondere 5 mm oder weniger betragen. Durch die Ausgestaltung, wie Sie in Bezug auf die Figuren 3A und 3B dargestellt ist, kann eine solche Dimensionierung einfach realisiert werden.

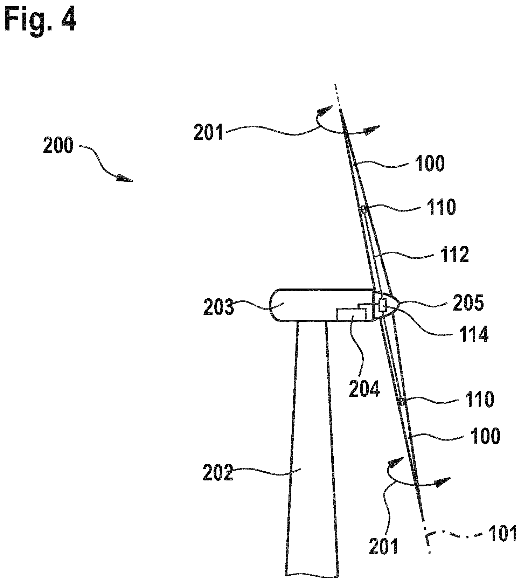

Figur 4 zeigt eine Windkraftanlage 200. Die Windkraftanlage 200 beinhaltet einen Turm 202 und eine Gondel 203. An der Gondel 203 ist der Rotor 500 befestigt. Der Rotor 500 beinhaltet eine Nabe 205, an der die Rotorblätter 100 befestigt sind. Gemäß typischen Ausführungsformen hat der Rotor 500 zumindest zwei Rotorblätter, insbesondere drei Rotorblätter. Beim Betrieb der Windenergieanlage bzw. der Windkraftanlage rotiert der Rotor 500, d.h. die Nabe 205 mit den Rotorblättern 100 um eine Achse. Dabei wird ein Generator zur Stromerzeugung angetrieben. Wie in Figur 4 dargestellt, ist zumindest ein Drucksensor 110 an einem Rotorblatt 100 zur Verfügung gestellt. Der Drucksensor 110 ist über eine Signalleitung bzw. einen Lichtleiter 112 mit einer Auswerteeinheit 114 verbunden. Die Auswerteeinheit 114 liefert z.B. ein Signal an eine Steuerungseinheit 204 der Windkraftanlage 200.

Hierbei ist es beispielsweise für den Einsatz in Rotorblättern von Windkraftanlagen bzw. für die Verfahren zur Überwachung von Windkraftanlagen besonders günstig, dass der Druck bzw. die Beschleunigung in einer Richtung senkrecht zur Längserstreckung des Lichtleiters 112 gemessen wird. Windenergieanlagen unterliegen einer komplexen Steuerung, die zum Beispiel durch wechselnde Betriebsbedingungen notwendig sein kann. Bei der Überwachung von Betriebszuständen von Windenergieanlagen wird eine Mehrzahl von Sensoren verwendet. Zum Beispiel können Druckmessungen zur Bestimmung eines Drucks an einem Rotorblatt, Dehnungsmessungen zur Messung der Biegung eines Rotorblatts, Beschleunigungsmessungen zur Messung einer Beschleunigung eines Rotorblatts oder andere Größen gemessen werden. Eine Gruppe von Sensoren, die als Erfolg versprechend für zukünftige Applikationen erscheint, sind faseroptische Sensoren.

Durch die mit dem Betrieb einer Windkraftanlage verknüpften Bedingungen, zum Beispiel Druck- und Temperaturschwankungen, Witterung und Wetterverhältnisse, aber auch insbesondere stark wechselnde Windverhältnisse, sowie durch die Vielzahl von gesetzlich vorgeschriebenen Sicherheitsmaßnahmen sind die Überwachung und die für die Überwachung notwendigen Sensoren einer Vielzahl von Randbedingungen unterworfen. Zum Beispiel kann im Betrieb eine Druckvariation an den Rotorblättern auftreten. Hierbei kann eine Instabilität entlang der Rotorblattachse auftreten, welche den Betrieb der Windkraftanlage stört und die Energieausbeute verringert. Ferner besteht die Möglichkeit, dass es in einzelnen Rotorblättern zu einer Druckänderung und damit zu Vibrationen bzw. Oszillationen kommt. Dies führt in vielen Fällen zu kritischen Betriebszuständen, welche aufwändige Steuerungs- und/oder Regelungs-Maßnahmen erfordern. Ferner kann durch eine Druckmessung direkt am Rotorblatt eine für eine Energieausbeute effiziente Einstellung eines Pitch-Winkels aufgefunden werden.

Gemäß einigen Ausführungsformen, die mit anderen hierin beschriebenen Ausführungsformen kombiniert werden können, handelt es sich bei dem Drucksensor 110 um einen faseroptischen Sensor, insbesondere um einen faseroptischen Drucksensor. Für faseroptische Drucksensoren wird ein optisches Signal wie zum Beispiel ein Interferenzspektrum mittels eines Lichtleiters 112, wie etwa einer optischen Faser, an die Auswerteeinheit 114 übertragen. Bei einem faseroptischen Drucksensor 110 kann das Sensorele-ment selbst außerhalb einer optischen Faser zur Verfügung gestellt werden. Ein Beispiel ist im Detail in Bezug auf die Figuren 1A, 1B, 2A und 2B beschrieben. Jedes Rotorblatt 100 kann separat eine individuelle Druckverteilung aufweisen. Daher wird gemäß manchen Ausführungsformen, die mit anderen Ausführungsformen kombiniert werden können, mindestens ein faseroptischer Drucksensor 110 in jedem Rotorblatt 100 zur Verfügung gestellt.

Gemäß einigen hier beschriebenen Ausführungsformen, die mit anderen Ausführungsformen kombiniert werden können, ermöglicht es die Auswerteeinheit 114, einen Umgebungsdruck des optischen Resonators, welcher auf die Sensormembran 303 einwirkt, auf Grundlage des optischen Interferenzsignals zu ermitteln.

Gemäß einigen der hier beschriebenen Ausführungsformen, die mit anderen Ausführungsformen kombiniert werden können, ermöglichen faseroptische Drucksensoren 110, bei welchen ein Signal optisch über einen Lichtleiter 112 übertragen wird, eine bisher in der Praxis als ungünstig angesehene radiale Montageposition entlang einer Längserstreckung des Rotorblatts 100, da die Übertragung mittels eines Lichtleiters 112 bzw. einer optischen Faser ein reduziertes Risiko eines Blitzschadens mit sich bringt. Daher können faseroptische Drucksensoren 110 derart zur Verfügung gestellt werden, dass sie eine Montage in einem radial äußeren Bereich 107 eines Rotorblatts 110 erlauben, ohne das Risiko eines Blitzschadens zu erhöhen.

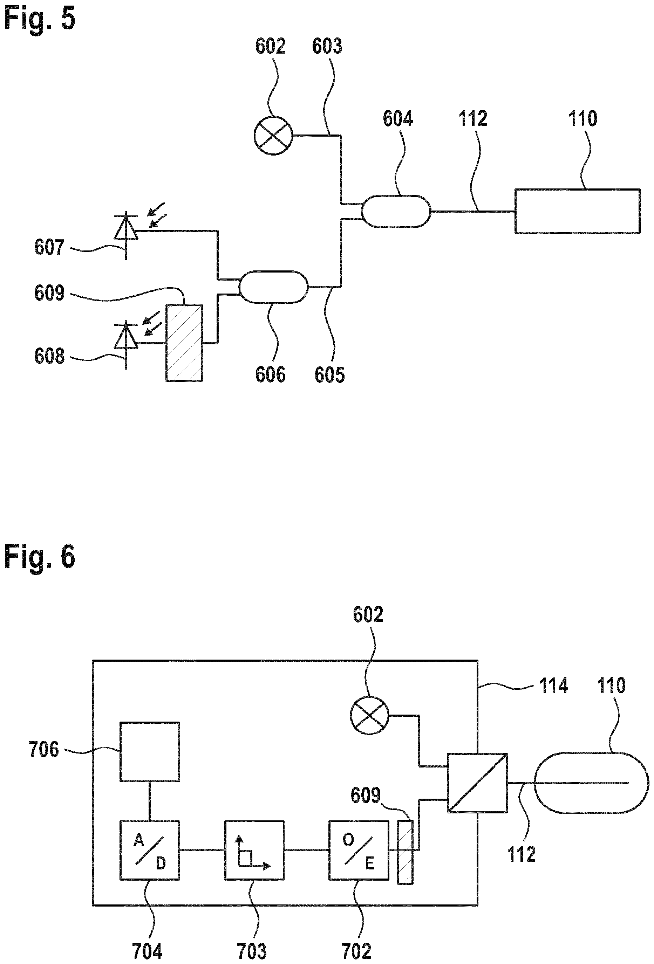

FIG. 5 zeigt ein typisches Messsystem zur faseroptischen Druckmessung gemäß den hierin beschriebenen Ausführungsformen. Das System enthält einen oder mehrere Drucksensoren 110. Das System weist eine Quelle 602 für elektromagnetische Strahlung, zum Beispiel eine Primärlichtquelle, auf. Die Quelle 602 dient zur Bereitstellung von optischer Strahlung, mit welcher mindestens ein faseroptischer Drucksensor 110 bestrahlt werden kann. Zu diesem Zweck ist eine optische Übertragungsfaser bzw. ein Lichtleiter 603 zwischen der Primärlichtquelle 602 und einem ersten Faserkoppler 604 bereitgestellt. Der Faserkoppler 604 koppelt das Primärlicht in die optische Faser bzw.
den Lichtleiter 112 ein. Die Quelle 602 kann zum Beispiel eine Breitbandlichtquelle, einen Laser, eine LED (light emitting diode), eine SLD (Superlumineszenzdiode), eine ASE-Lichtquelle (Amplified Spontaneous Emission-Lichtquelle) oder ein SOA (Semi-conductor Optical Amplifier) sein. Es können für hier beschriebene Ausführungsformen auch mehrere Quellen gleichen oder unterschiedlichen Typs (s.o.) verwendet werden.

Das Sensorelement, wie zum Beispiel ein optischer Resonator 302, ist an die Sensorfaser 112 optisch angekoppelt. Das von den faseroptischen Drucksensoren 110 zurückgeworfene Licht wird wiederum über den Faserkoppler 604 geleitet, welcher das Licht über die Übertragungsfaser 605 in einen Strahlteiler 606 leitet. Der Strahlteiler 606 teilt das zurückgeworfene Licht auf zur Detektion mittels eines ersten Detektors 607 und eines zweiten Detektors 608. Hierbei wird das auf dem zweiten Detektor 608 detektierte

Signal zunächst mit einer optischen Filtereinrichtung 609 gefiltert. Durch die Filtereinrichtung 609 kann eine Position eines aus dem optischen Resonator 302 ausgegebenen Interferenzmaximums oder -minimums bzw. eine Wellenlängenänderung durch den optischen Resonator detektiert werden.

Im Allgemeinen kann ein Messsystem, wie es in Figur 5 dargestellt ist, ohne den Strahlteiler 606 bzw. den Detektor 607 zur Verfügung gestellt sein. Der Detektor 607 ermöglicht jedoch eine Normierung des Messsignals des Drucksensors in Bezug auf anderweitige Intensitätsfluktuationen, wie zum Beispiel Schwankungen der Intensität der Quelle 602, Schwankungen durch Reflexionen an Schnittstellen zwischen einzelnen Lichtleitern, Schwankungen durch Reflexionen an Schnittstellen zwischen dem Lichtleiter 112 und der Umlenkeinheit 301, Schwankungen durch Reflexionen an Schnittstellen zwischen der Umlenkeinheit 301 und dem optischen Resonator 302 oder andere Intensitätsschwankungen. Diese Normierung verbessert die Messgenauigkeit und reduziert beim Betrieb des Messsystems eine Abhängigkeit von der Länge der zwischen der Auswerteeinheit 114 und dem faseroptischen Drucksensor 110 zur Verfügung gestellten Lichtleiter 112.

Die optische Filtereinrichtung 609 bzw. zusätzliche optische Filtereinrichtungen zur Filterung des Interferenzspektrums bzw. zur Detektion von Interferenzmaxima und -minima können einen optischen Filter umfassen, der gewählt ist aus der Gruppe, welche besteht aus einem Kantenfilter, einem Dünnschichtfilter, einem Faser-Bragg-Gitter, einem LPG, einem Arrayed-Waveguide-Grating (AWG), einem Echelle-Gitter, einer Gitteranordnung, einem Prisma, einem Interferometer, und jedweder Kombination davon.

Figur 6 zeigt eine Auswerteeinheit 114, wobei ein Signal eines faseroptischen Drucksensors 110 über einen Lichtleiter 112 zur Auswerteeinheit 114 geführt wird. In Figur 6 ist weiterhin eine Lichtquelle 602 dargestellt, die optional in der Auswerteeinheit zur Verfügung gestellt werden kann. Die Lichtquelle 602 kann aber auch unabhängig bzw. außerhalb von der Auswerteeinheit 114 zur Verfügung gestellt sein. Das optische Signal des faseroptischen Drucksensors 110, d.h. das optische Interferenzsignal, welches Interferenzmaxima und Interferenzminima aufweisen kann, wird mit einem Detektor, d.h. mit einem opto-elektrischen Wandler 702 in ein elektrisches Signal gewandelt. Das elektrische Signal wird mit einem analogen Anti-Aliasing-Filter 703 gefiltert. Im Anschluss an die analoge Filterung mit dem analogen Anti-Aliasing-Filter bzw. Tiefpassfilter 703 wird das Signal durch einen Analog-Digital-Wandler 704 digitalisiert.

Gemäß einigen hier beschriebenen Ausführungsformen, die mit anderen Ausführungsformen kombiniert werden können, kann die Auswerteeinheit 114 derart ausgelegt sein, dass diese das Interferenzsignal nicht nur hinsichtlich der Lage von Interferenzmaxima und Interferenzminima analysiert, sondern dass ferner eine Bestimmung der Phasenlage des Interferenzsignals erfolgt.

Gemäß einigen hier beschriebenen Ausführungsformen, die mit anderen Ausführungsformen kombiniert werden können, ermöglicht es die Auswerteeinheit 114, einen Umgebungsdruck des optischen Resonators 302, welcher auf die Sensormembran 303 einwirkt, auf Grundlage des optischen Interferenzsignals zu ermitteln. Der Anti-Aliasing-Filter kann eine Grenzfrequenz von 1 kHz oder kleiner insbesondere von 500 Hz oder kleiner, weiterhin insbesondere von 100 Hz oder kleiner aufweisen. Gemäß hier beschriebenen Ausführungsformen findet eine solche Filterung vor der Digitalisierung statt. Gemäß hier beschriebenen Ausführungsformen findet eine analoge Tiefpassfilterung vor einer Digitalisierung eines Signals eines faseroptischen Drucksensors 110 statt. Gemäß hier beschriebenen Ausführungsformen, die mit anderen Ausführungsformen kombiniert werden können, kann der Tiefpassfilter auch als ein analoger anti-aliasing Filter bezeichnet werden. Hierbei wird im Rahmen eines Abtasttheorems die Nyquist-Frequenz berücksichtigt, und eine Tiefpassfilterung mit Signalanteilen kleiner der Nyquist-Frequenz mittels des analogen Tiefpass-Filters bzw. analogen anti-aliasing Filters zur Verfügung gestellt. Durch die hier beschriebenen Ausführungsformen mit einem faseroptischen Drucksensor 110 und einer analogen Tiefpassfilterung kann eine verbesserte Messung einer Druckvariation zur Verfügung gestellt werden. Figur 6 zeigt ferner eine digitale Auswerteeinheit 706, die zum Beispiel eine CPU, Speicher und andere Elemente zur digitalen Datenverarbeitung beinhalten kann.

Wie in Bezug auf Figur 6 erläutert, kann ein Verfahren zur Druckerfassung mittels eines faseroptischen Drucksensors verbessert werden. Zum Beispiel ist eine Auswerteeinheit 114 zur Verfügung gestellt. Die Auswerteeinheit 114 kann einen Wandler zum Wandeln des optischen Signals in ein elektrisches Signal beinhalten. Zum Beispiel kann eine Fotodiode, ein Photomultiplier (PM) oder ein anderer opto-elektronischer Detektor als Wandler verwendet werden. Die Auswerteeinheit 114 beinhaltet ferner einen Anti-Aliasing-Filter 703, der zum Beispiel mit dem Ausgang des Wandlers bzw. des opto-elektronischen Detektors verbunden ist. Die Auswerteeinheit 114 kann ferner einen Analog-digital-Wandler 704 beinhalten, der mit dem Ausgang des Anti-Aliasing-Filters 703 verbunden ist. Die Auswerteeinheit 114 kann darüber hinaus eine digitale Auswerteeinheit 706 beinhalten, die zur Auswertung der digitalisierten Signale eingerichtet ist.

Gemäß noch weiteren Ausführungsformen, die mit hier beschriebenen Ausführungsformen kombiniert werden können, kann eine Temperaturkompensation in dem faseroptischen Drucksensor 110 derart bereitgestellt werden, dass für den Sensorkörper 300 und/oder die Sensormembran 303 und/oder die Abdeckung 304 Materialien mit einem sehr geringen thermischen Ausdehnungskoeffizienten verwendet werden.

Gemäß Ausführungsformen kann der Lichtleiter 112 zum Beispiel eine Glasfaser, eine optische Faser oder ein Polymerleiter sein, wobei Materialien wie optische Polymere, Polymethylmethacrylat, Polycarbonat, Quarzglas, Ethylen-Tetrafluorethylen verwendet werden können, die gegebenenfalls dotiert sind. Insbesondere kann die optische Faser als Singlemode-Faser, zum Beispiel eine SMF-28 Faser ausgebildet sein. Hierbei bezeichnet der Ausdruck "SMF-Faser" einen speziellen Typ einer Standard-Singlemode-Faser.

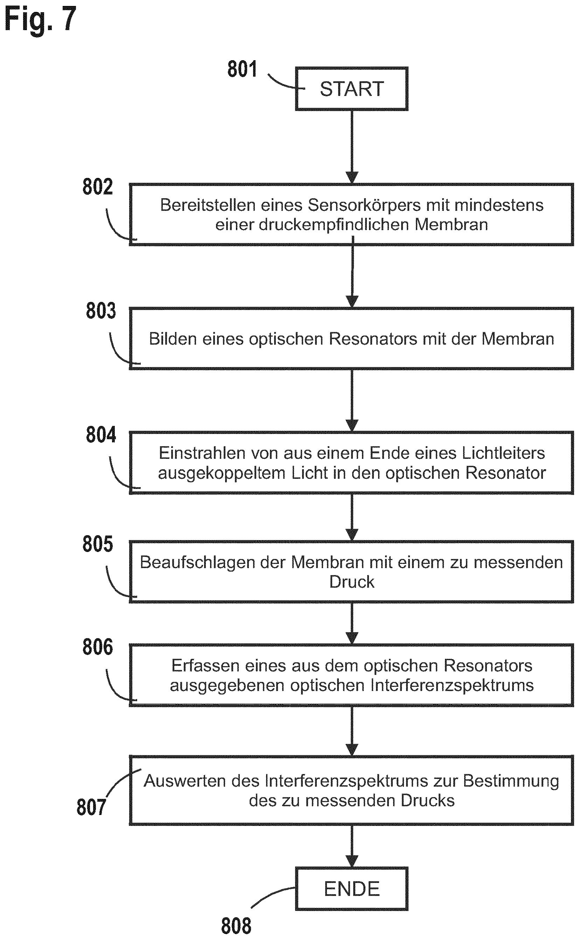

Figur 7 zeigt ein Ablaufdiagramm zur Veranschaulichung eines nicht beanspruchten Verfahrens zur Druckmessung mittels eines faseroptischen Drucksensors 110.

Eine optische Druckmessung wird bei einem Block 801 gestartet. Dann erfolgt ein Bereitstellen des Sensorkörpers 300 mit mindestens einer druckempfindlichen Sensormembran 303 (Block 802), ein Bilden des optischen Resonators 302 mit der Membran 303 (Block 803) und ein Einstrahlen von aus einem Ende des Lichtleiters 112 ausgekoppeltem Licht in den optischen Resonator 302 in Block 804. Das aus einem Ende des Lichtleiters 112 ausgekoppelte Licht wird in den optischen Resonator 302 über die zwischen dem Ende des Lichtleiters und dem optischen Resonator 302 angeordnete optische Umlenkeinheit 301 geführt.

Wird nun die Membran 303 mit einem zu messenden Druck beaufschlagt (Block 805), lässt sich in einem Block 806 ein druckabhängiges, aus dem optischen Re-sonators ausgegebenes optisches Interferenzspektrum erfassen. Das in den Lichtleiter 112
aus dem optischen Resonator 302 zurückgeworfene Licht ist somit gefiltert, insbesondere Fabry-Perot-gefiltert. Mit anderen Worten entspricht das ausgegebene optische Interferenzspektrum einem Lichtanteil, welcher von dem Fabry-Perot-Filter zurückgeworfen bzw. reflektiert wird.

Das Auswerten des Interferenzspektrums zur Bestimmung des zu messenden Drucks wird schließlich in einem Block 807 durchgeführt. Die Prozedur wird in einem Block 808 beendet.

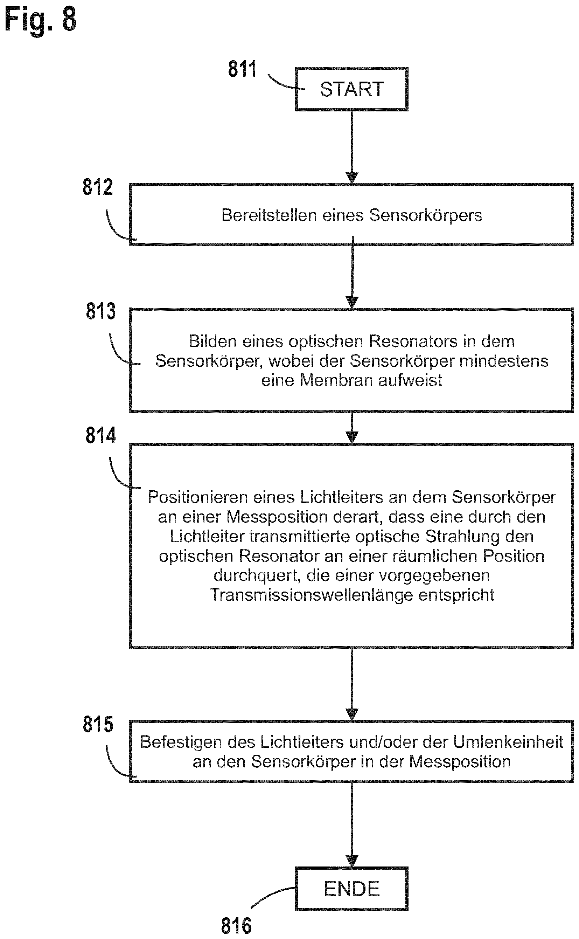

Figur 8 zeigt ein Ablaufdiagramm zur Veranschaulichung eines nicht beanspruchten Verfahrens zum Herstellen eines faseroptischen Drucksensors 110.

Im Einzelnen beinhaltet das Verfahren zum Herstellen des faseroptischen Drucksensors 110 die Blöcke 811 bis 816. Die Herstellungsprozedur wird in einem Block 811 gestartet. Anschließend erfolgt in einem Block 812 ein Bereitstellen eines Sensorkör-pers 300. In einem folgenden Block 813 wird ein optischer Resonator 302 in dem Sensorkörper 300 gebildet, wobei der Sensorkörper 300 mindestens eine Sensormembran 303 aufweist.

In einem Block 814 wird ein Lichtleiters 112 an dem Sensorkörper 300 an einer Messposition 402 derart positioniert, dass eine durch den Lichtleiter 112 transmittierte optische Strahlung den optischen Resonator 302 an einer räumlichen Position durchquert, die einer vorgegebenen Transmissionswellenlänge entspricht. Schließlich erfolgt ein Befestigen des Lichtleiters 112 und/oder der Umlenkeinheit 301 an den Sensorkörper 300 in der Messposition 402 (Block 815). Die Herstellungsprozedur für den faseroptischen Drucksensor 110 endet in einem Block 816.

Weitere Anwendungen des faseroptischen Drucksensors 110 bestehen auf dem Gebiet der Messung akustischer und statischer Signale. Durch die Detektion akustischer Signale werden beispielsweise Luftschall- oder Köperschall-Messvorrichtungen ermöglicht. Hierbei können die Schallsignale auf die Sensormembran 300 des faseroptischen Drucksensors 110 übertragen werden, wobei akustische Frequenzen in einem Bereich von 1 kHz oder höher, in typischer Weise in einem Bereich von 5 kHz oder höher detektiert werden können.

Der faseroptische Drucksensor 110 kann ferner zur Messung einer Beschleunigung ungefähr senkrecht zur Oberfläche der Sensormembran 303 herangezogen werden. Hierfür ist es vorteilhaft, wenn eine mit der Sensormembran-Oberseite in Verbindung stehende Masse bereitgestellt wird. Hierbei kann die Masse entweder zusätzlich zur Masse der Membran zur Verfügung gestellt werden oder die Membran kann mit einer geeigneten ausreichend großen Masse ausgestaltet sein. Neben Druck- und Beschleunigungsmessungen an Rotorblättern 100 ermöglicht der faseroptische Drucksensor 110 daher darüber hinaus Druck- und Beschleunigungsmessungen an Tragflächen, Flügeln, Leichtbaustrukturen, etc.

Eine weitere Anwendung ist der Einsatz des faseroptischen Drucksensors 110 bei der Erfassung von Druck in Fluiden. Hierbei ist es vorteilhaft, wenn die Sensormembran 303 an ihrer Oberseite mit dem zu messenden Fluid in Verbindung steht.

Obwohl die vorliegende Erfindung vorstehend anhand typischer Ausführungsbeispiele beschrieben wurde, ist sie darauf nicht beschränkt, sondern auf vielfältige Weise modifizierbar. Auch ist die Erfindung nicht auf die genannten Anwendungsmöglichkeiten beschränkt

## Patentansprüche

1. Faseroptischer Drucksensor (110), umfassend:
einen Lichtleiter (112) mit einem Ende;
eine mit dem Ende des Lichtleiters (112) verbundene optische Umlenkeinheit (301); und
einen Sensorkörper (300), in dem eine Kavität (302) ausgebildet ist, welche mit einer Sensormembran (303) abgedeckt ist, die eine Oberseite der Kavität (302) bildet,
wobei die Oberseite und eine durch den Sensorkörper (300) gebildete Unterseite der Kavität (302) einen optischen Resonator bilden,
wobei sich der Lichtleiter (112) an der Unterseite des Sensorkörpers (300) entlang einer Lichtleiterachse des Lichtleiters (112) erstreckt,
wobei die optische Umlenkeinheit (301) dazu ausgebildet ist, aus dem Lichtleiter (112) austretendes Licht auf die Kavität (302) umzulenken,
wobei das Ende des Lichtleiters (112) sowohl als Lichtaustrittsfläche zum Emittieren von Licht in Richtung zur optischen Umlenkeinheit (301) als auch als Lichteintrittsfläche zum Aufnehmen von Licht, welches aus der Kavität (302) zurück reflektiert wird, dient,
wobei die Kavität (302) entlang der Längserstreckung des Lichtleiters (112) eine unterschiedliche Länge (401) aufweist,
wobei die Umlenkeinheit (301) an dem Sensorkörper (300) in einer Messposition (402) mittels eines aushärtbaren Klebers oder einer Lötverbindung angebracht ist.

2. Faseroptischer Drucksensor (110) nach Anspruch 1, wobei der optische Resonator ein Fabry-Perot-Interferometer ist, das eine Kavität (302) mit der mindestens einen Membran (303) bildet.

3. Faseroptischer Drucksensor (110) nach Anspruch 1 oder 2, wobei der optische Resonator luftdicht zur Umgebung abgeschlossen ist und einen vorbestimmten Innendruck aufweist.

4. Faseroptischer Drucksensor (110) nach einem der Ansprüche 1 bis 3, wobei der faseroptische Drucksensor (110) ferner mindestens eines der folgenden umfasst:
eine Gradientenindex-Linse (GRIN-Linse), eine Kugellinse, und jedwede Kombination davon.

5. Faseroptischer Drucksensor (110) nach einem der Ansprüche 1 bis 4, wobei die Umlenkeinheit (301) ein Umlenkprisma umfasst.

6. Faseroptischer Drucksensor (110) nach einem der Ansprüche 1 bis 5, wobei die Umlenkeinheit (301) zusammen mit dem Ende des Lichtleiters (112) monolithisch ausgebildet ist.

7. Faseroptischer Drucksensor (110) nach einem der Ansprüche 1 bis 6, wobei sich der Lichtleiter (112) in einer Richtung ungefähr parallel zur Resonatoroberfläche erstreckt.

## Claims

1. A fibre-optic pressure sensor (110), comprising:
a light guide (112) having an end;
an optical deflector unit (301) connected to the end of the light guide (112); and
a sensor body (300) in which a cavity (302) is formed, which is covered with a sensor membrane (303) which forms a top side of the cavity (302), wherein the top side and a bottom side of the cavity (302), which is formed by the sensor body (300), form an optical resonator,
wherein the light guide (112) extends along a light guide axis of the light guide (112) at the bottom side of the sensor body (300),
wherein the optical deflector unit (301) is designed to deflect light escaping from the light guide (112) toward the cavity (302),
wherein the end of the light guide (112) serves both as a light-emitting surface for emitting light in the direction of the optical deflector unit (301) and as a light entry surface for receiving light, which is reflected back from the cavity (302),
wherein the cavity (302) has a different length (401) along the longitudinal extension of the light guide (112),
wherein the deflector unit (301) is attached to the sensor body (300) in a measuring position (402) by means of a curable adhesive or a soldered connection.

2. The fibre-optic pressure sensor (110) according to claim 1, wherein the optical resonator is a Fabry-Perot interferometer which forms a cavity (302) with the at least one membrane (303).

3. The fibre-optic pressure sensor (110) according to claim 1 or 2, wherein the optical resonator is sealed air-tight to the environment and has a predetermined internal pressure.

4. The fibre-optic pressure sensor (110) according to any one of claims 1 to 3, wherein the fibre-optic pressure sensor (110) further comprises at least one of the following: a gradient index lens (GRIN lens), a spherical lens, and any combination thereof.

5. The fibre-optic pressure sensor (110) according to any one of claims 1 to 4, wherein the deflector unit (301) comprises a deflecting prism.

6. The fibre-optic pressure sensor (110) according to any one of claims 1 to 5, wherein the deflector unit (301) is designed to be monolithic together with the end of the light guide (112).

7. The fibre-optic pressure sensor (110) according to any one of claims 1 to 6, wherein the light guide (112) extends in a direction which is approximately parallel to the resonator surface.

## Revendications

1. Capteur de pression à fibre optique (110) comprenant:
une fibre optique(112) ayant une extrémité;
une unité de déviation optique (301) connectée à l'extrémité de la fibre optique (112); et
un corps de capteur (300), dans lequel est formée une cavité (302), qui est recouverte d'une membrane de capteur (303) qui forme un côté supérieur de la cavité (302), dans lequel le côté supérieur et un côté inférieur formés par le corps de capteur (300) de la cavité (302) forment un résonateur optique,
dans lequel la fibre optique (112) s'étend sur la face inférieure du corps de capteur (300) le long d'un axe de fibre optique de la fibre optique (112),
dans lequel l'unité de déviation optique (301) est conçue pour dévier la lumière sortante de la fibre optique (112) sur la cavité (302),
dans lequel l'extrémité de la fibre optique (112) sert à la fois de surface de sortie de lumière pour émettre de la lumière dans la direction de l'unité de déviation optique (301) et de surface d'entrée de lumière pour recevoir la lumière qui est réfléchie en retour depuis la cavité (302),
dans lequel la cavité (302) présente une longueur (401) différente le long de l'étendue longitudinale de la fibre optique(112),
dans lequel l'unité de déviation (301) est fixée au corps de capteur (300) dans une position de mesure (402) au moyen d'un adhésif durcissable ou d'une connexion soudée.

2. Capteur de pression à fibre optique (110) selon la revendication 1, dans lequel le résonateur optique est un interféromètre Fabry-Perot, qui forme une cavité (302) avec ladite au moins une membrane (303).

3. Capteur de pression à fibre optique (110) selon la revendication 1 ou 2, dans lequel le résonateur optique est fermé de manière étanche à l'air par rapport à l'environnement et présente une pression interne prédéterminée.

4. Capteur de pression à fibre optique (110) selon une quelconque des revendications 1 à 3, dans lequel le capteur de pression à fibre optique (110) comprend en outre au moins un des éléments suivants: une lentille à gradient d'indice (lentille GRIN), une lentille sphérique et toute combinaison de celles-ci.

5. Capteur de pression à fibre optique (110) selon une quelconque des revendications 1 à 4, dans lequel l'unité de déviation (301) comprend un prisme de déviation.

6. Capteur de pression à fibre optique (110) selon une quelconque des revendications 1 à 5, dans lequel l'unité de déviation (301) est formée de manière monolithique conjointement avec l'extrémité de la fibre optique (112).

7. Capteur de pression à fibre optique (110) selon une quelconque des revendications 1 à 6, dans lequel la fibre optique (112) s'étend dans une direction approximativement parallèle à la surface du résonateur.
